# EUROPEAN PATENT APPLICATION

(11) **EP 4 445 763 A1**
(43) Date of publication of application: **16.10.2024**
(21) Application number: 21967258.1
(22) Date of filing: 10.12.2021
(51) Int. Cl.: A24F 40/40

(54) **POWER SUPPLY UNIT FOR AEROSOL GENERATION DEVICE**

(71) Applicant: Japan Tobacco Inc., Tokyo 105-6927 (JP)
(72) Inventor: MARUBASHI Keiji, Tokyo 130-8603 (JP); KITAHARA Minoru, Tokyo 130-8603 (JP)
(74) Representative: Hoffmann Eitle
(86) International application number: PCT/JP2021/045592
(87) International publication number: WO 2023/105766

(57) **Abstract**

A power supply unit (100) for an aerosol generation device (10) comprises: a main substrate (20) that includes a battery connector (20D) that is installed at a front surface (201); a power supply (ba) that is provided to a back surface (202) and can supply power to an atomizer that atomizes an aerosol source; and a lead wire (16) that is connected to the power supply (ba) and the battery connector (20D). The main substrate (20) has a notch (80), and the lead wire (16) passes through the notch (80).

## Description

### TECHNICAL FIELD

The present invention relates to a power supply unit of an aerosol generation device that generates aerosol.

### BACKGROUND ART

In a heating-type cigarette which is one form of an aerosol generation device, a battery which is a power supply and a circuit substrate are generally connected by an FPC or a lead wire. Further, electric power supplied from the battery is supplied to electronic components mounted on or connected to the circuit substrate (for example, Patent Literatures 1 and 2).

### CITATION LIST

### PATENT LITERATURE

Patent Literature 1: Japanese Unexamined Patent Application Publication No. 2020-527053
Patent Literature 2: Japanese Unexamined Patent Application Publication No. 2020-114249

### SUMMARY OF INVENTION

### TECHNICAL PROBLEM

An aerosol generation device carried by a user on a daily basis is preferably as small as possible. However, in recent years, as functions of the aerosol generation device have been enhanced, the number of components to be incorporated in a housing tends to increase. Further, the battery tends to have a high capacity. Under such circumstances, there is a demand for a technique for appropriately routing the FPC or the lead wire without increasing a size of the housing.

The present invention provides a power supply unit of an aerosol generation device in which a wiring can be appropriately routed without increasing a size of a housing.

### SOLUTION TO PROBLEM

A power supply unit of the aerosol generation device of the present invention includes:
a circuit substrate including a first surface, a second surface located on a back side of the first surface, and a power supply connector mounted on the first surface;
a power supply configured to supply electric power to an atomizer that atomizes an aerosol source, and disposed on a second surface side; and
a power supply wiring connected to the power supply and the power supply connector,
the circuit substrate includes a cutout, and
the power supply wiring passes through the cutout.

### ADVANTAGEOUS EFFECTS OF INVENTION

According to the present invention, a size of the aerosol device in a width direction or a length direction of the circuit substrate can be reduced as compared with a case where no cutout is provided, and thus the aerosol generation device can be reduced in size.

### BRIEF DESCRIPTION OF DRAWINGS

FIG. 1 is a perspective view of an aerosol generation device 10.
FIG. 2 is another perspective view of the aerosol generation device 10.
FIG. 3 is an exploded perspective view of the aerosol generation device 10.
FIG. 4 is a left side view of an internal unit 2.
FIG. 5 is a right side view of the internal unit 2.
FIG. 6 is a perspective view showing a configuration of a heating unit 60 and a circuit unit 70 of the internal unit 2.
FIG. 7 is a view showing a front surface 201 of a main substrate 20.
FIG. 8 is a view showing a back surface 202 of the main substrate 20.
FIG. 9 is a partially enlarged view of FIG. 7.

### DESCRIPTION OF EMBODIMENTS

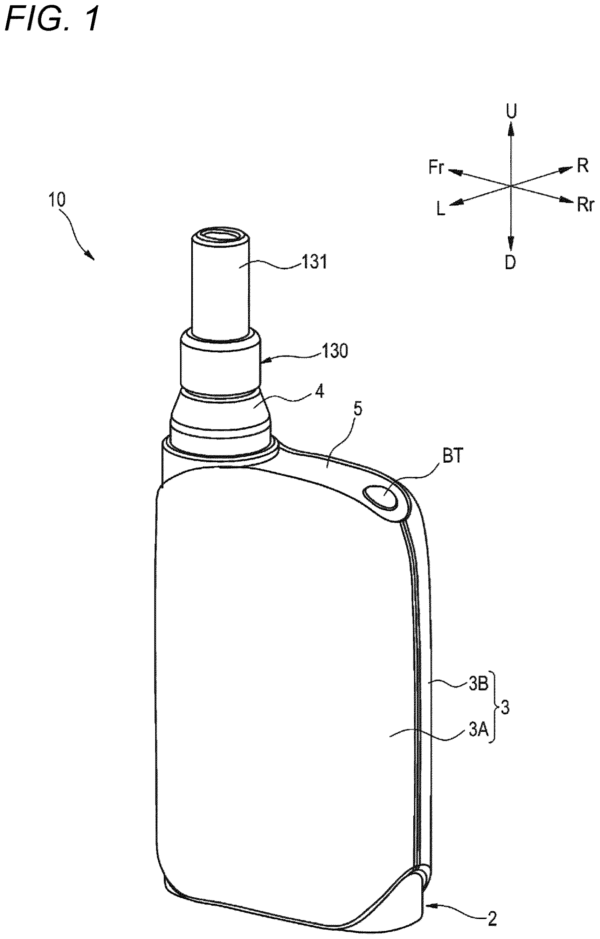

Hereinafter, a power supply unit of an aerosol generation device according to an embodiment of the present invention will be described. First, an aerosol generation device including a power supply unit of the present embodiment will be described with reference to FIGS. 1 to 8.

### (Aerosol Generation Device)

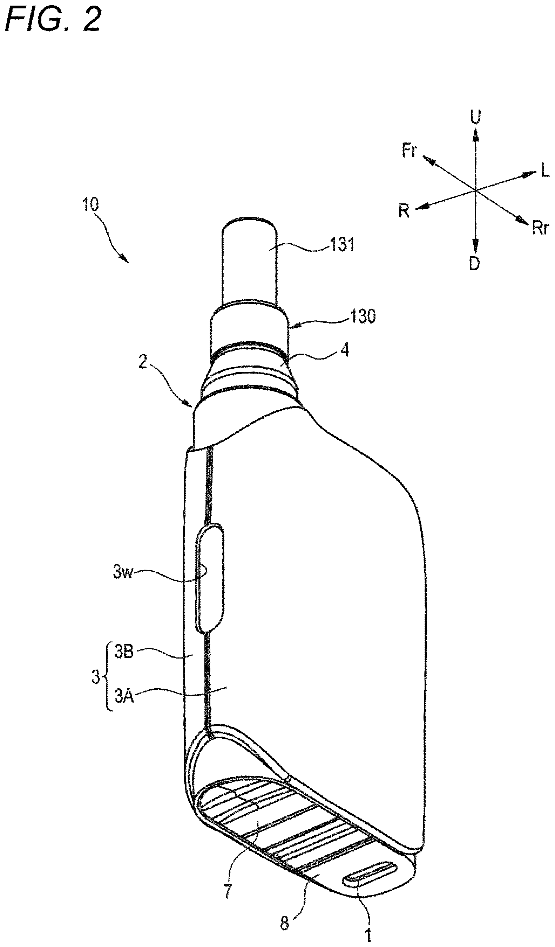

An aerosol generation device 10 is a device for generating flavored aerosol without combustion and inhaling the generated aerosol. The aerosol generation device 10 preferably has a size that fits in hands, and for example, as shown in FIGS. 1 and 2, has a rounded, substantially rectangular parallelepiped shape. The shape of the aerosol generation device 10 is not limited thereto, and may be a bar shape, an egg shape, or the like. In the following description, three directions orthogonal to one another in the aerosol generation device 10 are referred to as an upper-lower direction, a front-rear direction, and a left-right direction in descending order of length. In the following description, for convenience, as shown in FIGS. 1 to 8, front, rear, left, right, upper, and lower are defined, a front side is denoted by Fr, a rear side is denoted by Rr, a left side is denoted by L, a right side is denoted by R, an upper side is denoted by U, and a lower side is denoted by D.

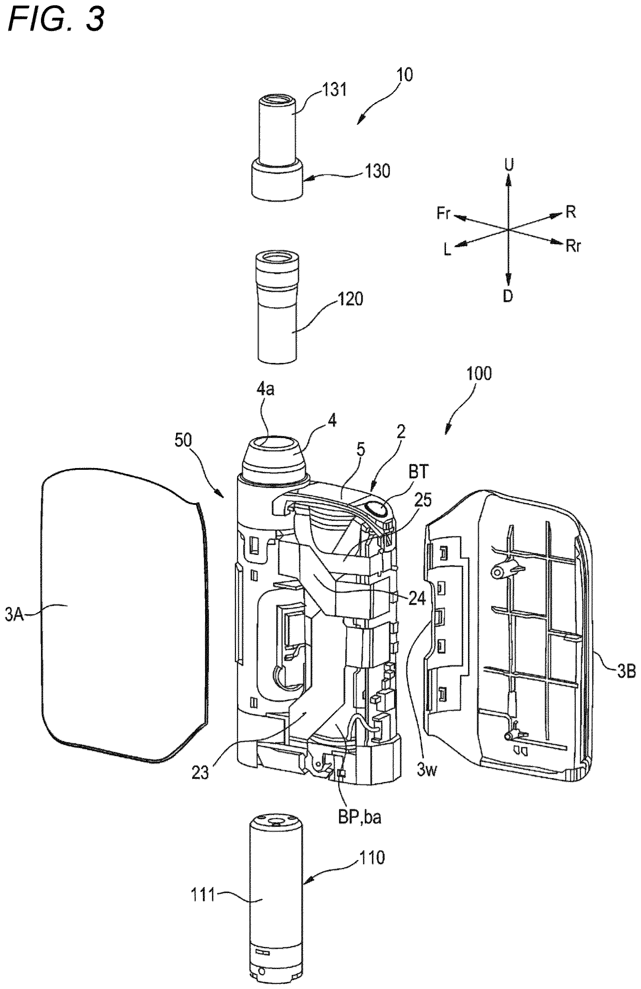

Referring also to FIG. 3, the aerosol generation device 10 includes a power supply unit 100, a first cartridge 110, and a second cartridge 120. The first cartridge 110 and the second cartridge 120 are detachable with respect to the power supply unit 100. In other words, the first cartridge 110 and the second cartridge 120 are replaceable.

### (Power Supply Unit)

The power supply unit 100 includes an internal unit 2 and a case 3, and at least a part of the internal unit 2 is accommodated in the case 3.

The case 3 includes a first case 3A and a second case 3B that are detachable in the left-right direction (thickness direction), the first case 3A and the second case 3B are assembled in the left-right direction (thickness direction), thereby forming a front surface, a rear surface, a left surface, and a right surface of the power supply unit 100. Specifically, the first case 3A is supported on a left surface of a chassis 50 to be described later included in the internal unit 2, the second case 3B is supported on a right surface of the chassis 50, and the internal unit 2 is accommodated in the case 3. A capsule holder 4 is provided on the front side on the upper surface of the power supply unit 100. The capsule holder 4 is provided with an opening portion 4a that is opened upward. The capsule holder 4 is configured such that the second cartridge 120 can be inserted through the opening portion 4a. On the second cartridge 120, a mouth piece 130 is detachably provided.

The upper surface of the power supply unit 100 is formed by an organic light-emitting diode (OLED) cover 5 disposed behind the opening portion 4a, and the lower surface of the power supply unit 100 is formed by a pivotable lower lid 7 and a lower cover 8 provided with a charging terminal 1.

An inclined surface inclined downward toward the rear is provided between the upper surface and the rear surface of the power supply unit 100. The inclined surface is provided with an operation unit operable by a user. The operation unit of the present embodiment is a button-type switch BT, but may be implemented by a touch panel or the like. The operation unit is used to start/shut off/operate a micro controller unit (MCU) 6 and various sensors, which will be described later, based on a use intention of the user.

The charging terminal 1 accessible from the lower cover 8 is configured to be electrically connected to an external power supply (not shown) capable of supplying electric power to the power supply unit 100 to charge a power supply ba provided in a battery pack BP. The charging terminal 1 is, for example, a receptacle into which a mating plug can be inserted. As the charging terminal 1, a receptacle into which various USB terminals or the like can be inserted can be used. As an example, in the present embodiment, the charging terminal 1 is a USB Type-C receptacle.

The charging terminal 1 may include, for example, a power receiving coil, and may be configured to receive electric power transmitted from the external power supply in a non-contact manner. A wireless power transfer method in this case may be an electromagnetic induction type, a magnetic resonance type, or a combination of the electromagnetic induction type and the magnetic resonance type. As another example, the charging terminal 1 may be connectable to various USB terminals or the like, and may include the above-described power receiving coil.

As shown in FIGS. 3 to 6, the internal unit 2 includes the battery pack BP, the chassis 50, a heating unit 60, a circuit unit 70, a notification unit, and various sensors.

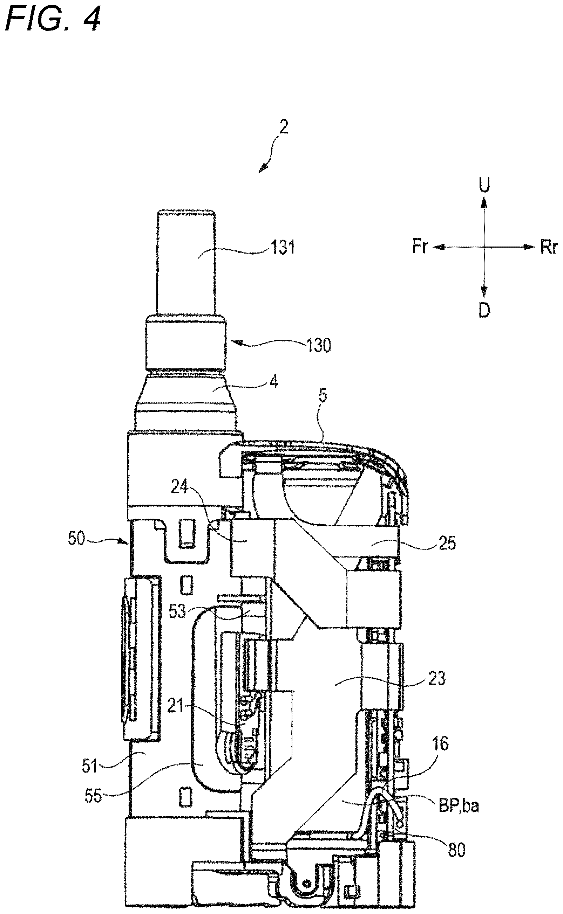

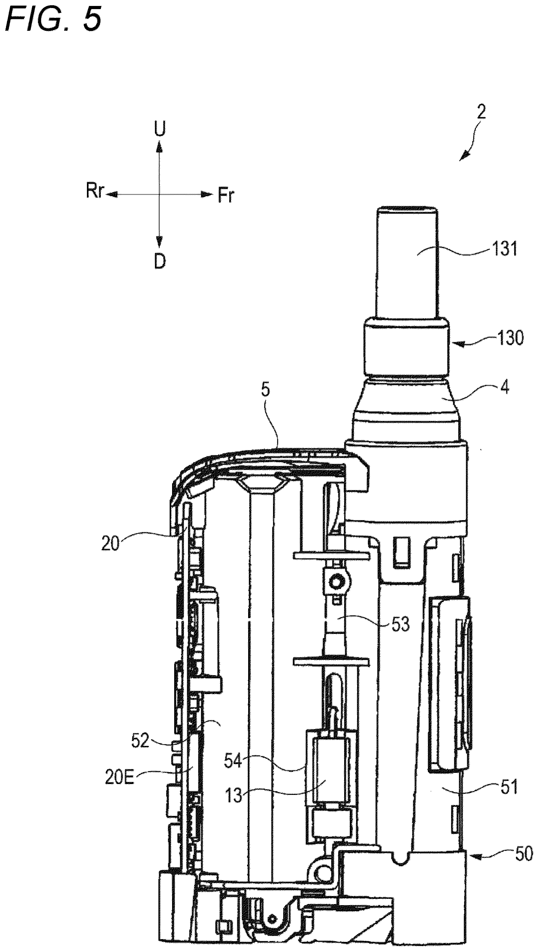

As shown in FIGS. 4 and 5, the chassis 50 includes a cylindrical cartridge holding portion 51 located on a front side, a half-cylindrical battery holding portion 52 located on a rear side and having a left side cut out, a plate-shaped coupling portion 53 coupling the cartridge holding portion 51 and the battery holding portion 52, a motor holding portion 54 provided below and on a right side of the coupling portion 53 in a manner of straddling the cartridge holding portion 51 and the battery holding portion 52, and a sensor holding portion 55 provided on a left rear side of the cartridge holding portion 51.

The first cartridge 110 is inserted into the cartridge holding portion 51 from below in a state where the lower lid 7 is opened. When the lower lid 7 is closed in a state where the first cartridge 110 is inserted, the first cartridge 110 is accommodated in the cartridge holding portion 51. The capsule holder 4 is attached to an upper portion of the cartridge holding portion 51. In the cartridge holding portion 51, a vertically long through hole is provided on a front side, and a remaining amount of an aerosol source of the first cartridge 110 and light of a light emitting diode (LED) that is not shown can be visually observed through a remaining amount confirmation window 3w provided at a joint of the first case 3A and the second case 3B. The LED is provided on a puff sensor substrate 21 to be described later. The first cartridge 110 will be described later.

The battery pack BP is disposed in the battery holding portion 52. The battery pack BP includes the power supply ba and a power supply thermistor for detecting a temperature of the power supply ba. The power supply ba is a chargeable secondary battery, an electric double-layer capacitor, or the like, and is preferably a lithium ion secondary battery. An electrolyte of the power supply ba may be constituted by one or a combination of a gel electrolyte, an electrolytic solution, a solid electrolyte, and an ionic liquid.

A vibration motor 13 is disposed in the motor holding portion 54. An inhalation sensor 15 to be described later, which provides an output in response to an inhalation operation (puff operation) of the user, is disposed in the sensor holding portion 55.

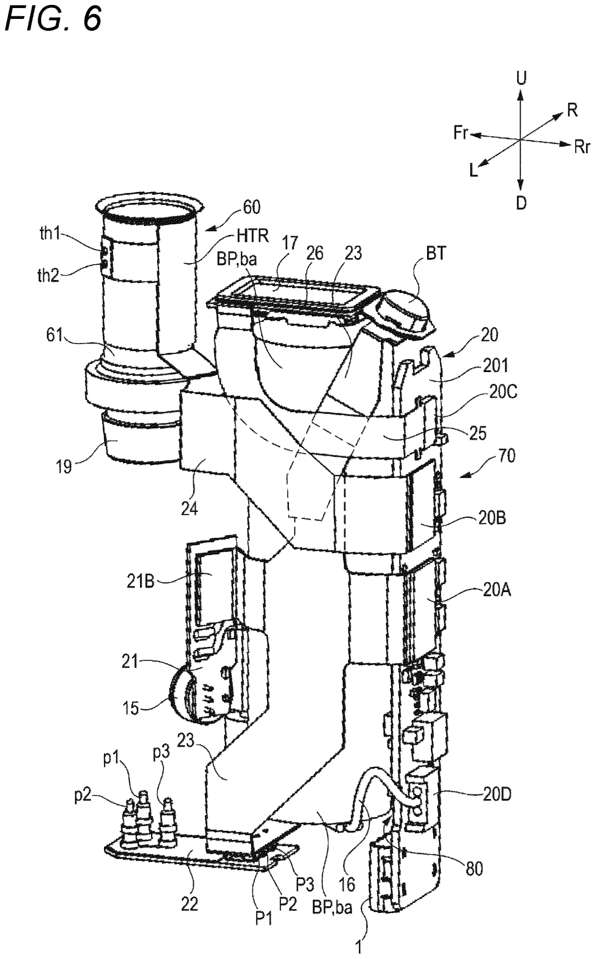

As shown in FIG. 6, the heating unit 60 includes a cylindrical heat transfer tube 61 and a sheet heater HTR wound around an outer periphery of the heat transfer tube 61. The capsule holder 4 is separately provided around the sheet heater HTR. An air layer between the capsule holder 4 and the sheet heater HTR functions as a heat insulator. A lower portion of the second cartridge 120 inserted from the opening portion 4a of the capsule holder 4 is accommodated in the heat transfer tube 61, and a lower portion of the second cartridge 120 is heated by the sheet heater HTR. Accordingly, as compared with a case where the heating unit 60 is not provided, a flavor source stored in the second cartridge 120 easily releases a flavor, so that the aerosol is easily flavored.

The heating unit 60 may be an element capable of heating the second cartridge 120. Examples of the element include a resistance heating element, a ceramic heater, and an induction-heating-type heater. As the resistance heating element, for example, a heating element having a positive temperature coefficient (PTC) characteristic in which a resistance value increases with an increase in temperature is preferably used. Alternatively, a heating element having a negative temperature coefficient (NTC) characteristic in which the resistance value decreases with an increase in temperature may be used. The heating unit 60 has a function of defining a flow path of air to be supplied to the second cartridge 120 and a function of heating the second cartridge 120.

The notification unit notifies various kinds of information such as a charging state of the power supply ba, a remaining amount of the first cartridge 110, and a remaining amount of the second cartridge 120. The notification unit of the present embodiment includes the LED and the vibration motor 13. The notification unit may be implemented by a light emitting element such as the LED, a vibration element such as the vibration motor 13, or a sound output element. The notification unit may be a combination of two or more elements among the light emitting element, the vibration element, and the sound output element.

The various sensors include the inhalation sensor 15 that detects the puff operation (inhalation operation) of the user, a heater temperature sensor that detects a temperature of the sheet heater HTR, and the like.

The inhalation sensor 15 includes, for example, a capacitor microphone, a pressure sensor, and a flow rate sensor. A plurality of inhalation sensors 15 may be disposed apart from each other, and the puff operation may be detected based on a difference between output values of the inhalation sensors 15. The heater temperature sensor includes a first thermistor th1 and a second thermistor th2. The first thermistor th1 and the second thermistor th2 are preferably in contact with or close to the sheet heater HTR. When the sheet heater HTR has the PTC characteristic or the NTC characteristic, the sheet heater HTR may be used for the heater temperature sensor. The heater temperature sensor includes two thermistors, but may include one thermistor.

The circuit unit 70 includes four rigid circuit substrates, three flexible printed circuits (FPCs) or flexible printed circuit substrates, a plurality of integrated circuits (ICs), and a plurality of elements. The four circuit substrates include a main substrate 20, the puff sensor substrate 21, a pogo pin substrate 22, and an OLED substrate 26. The three FPCs include a main FPC 23, a heater FPC 24, and an OLED FPC 25.

The main substrate 20 is disposed between the battery pack BP and a rear surface of the case 3 (the rear surface of the power supply unit 100) such that an element mounting surface faces the front-rear direction. The main substrate 20 is configured by laminating a plurality of layers (six layers in the present embodiment) of substrates, and electronic components (elements) such as the MCU 6 and a charging IC 3 are mounted thereon.

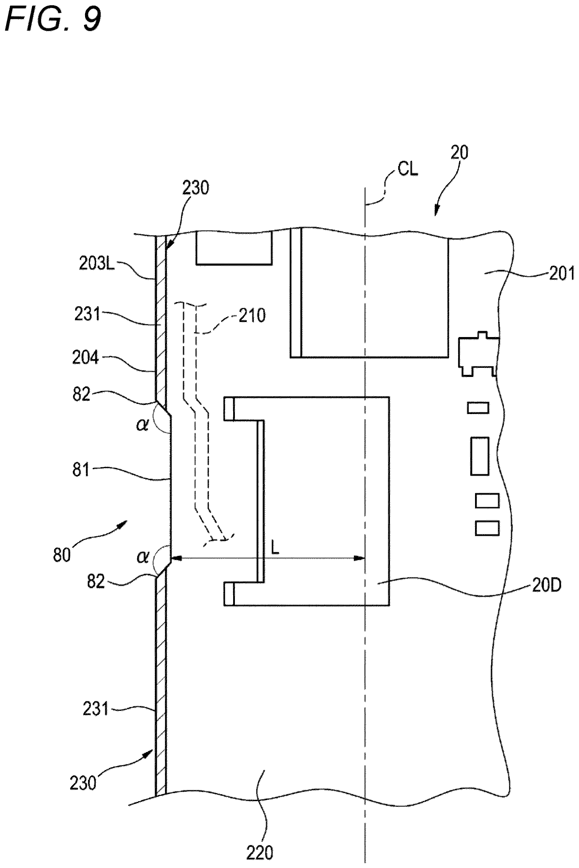

As to be described later in detail with reference to FIG. 9 and the like, the MCU 6 is a control device that is connected to various sensor devices such as the inhalation sensor 15, the operation unit, the notification unit, and a memory or the like that stores the number of times of puff operations, a load, an energization time to the sheet heater HTR, and the like, and performs various controls of the aerosol generation device 10. Specifically, the MCU 6 is implemented by a processor as a main component, and further includes a storage medium such as a random access memory (RAM) necessary for an operation of the processor and a read only memory (ROM) storing various kinds of information. For example, the processor in the present description is an electrical circuit in which circuit elements such as semiconductor devices are combined. A part of the elements (for example, the inhalation sensor 15 and the memory) connected to the MCU 6 may be provided inside the MCU 6 as a function of the MCU 6 itself.

Further, the charging IC 3 is an IC that performs charging control of the power supply ba by the electric power received via the charging terminal 1, and supplies the electric power of the power supply ba to the electronic components and the like on the main substrate 20.

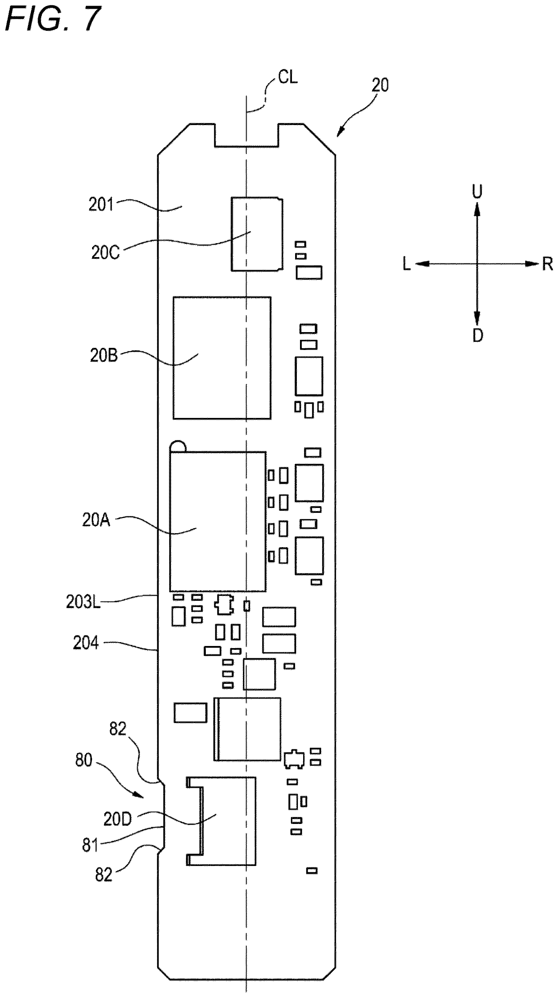

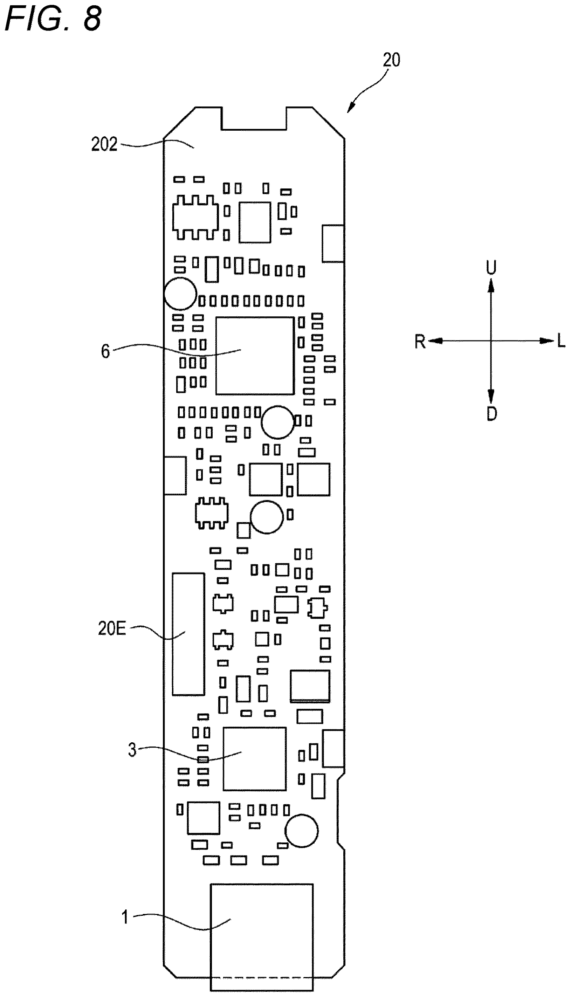

The main substrate 20 will be described more specifically with reference to FIGS. 7 and 8. Hereinafter, a surface of the main substrate 20 facing rearward is referred to as a front surface 201 for convenience, and a surface of the main substrate 20 facing forward is referred to as a back surface 202 for convenience. FIG. 7 is a diagram showing the front surface 201 of the main substrate 20, and FIG. 8 is a diagram showing the back surface 202 of the main substrate 20.

As shown in FIG. 8, the MCU 6 and the charging IC 3 are mounted on the back surface 202 of the main substrate 20 together with the charging terminal 1. A debug connector 20E is further mounted on the back surface 202. The debug connector 20E is an interface for rewriting a program of the MCU 6 from an external device such as a personal computer, and for example, a connector conforming to a Serial Wire Debug (SWD) standard is used. Meanwhile, as shown in FIG. 7, an OLED connector 20C, a heater connector 20B, a main connector 20A, and a battery connector 20D which is connected to the battery pack BP via a lead wire 16 (see FIG. 6) are mounted on the front surface 201 of the main substrate 20.

As shown in FIGS. 4 and 6, the puff sensor substrate 21 is disposed on the sensor holding portion 55 of the chassis 50 such that an element mounting surface faces a right front side and a left rear side. The inhalation sensor 15 is mounted on the puff sensor substrate 21.

As shown in FIG. 6, the OLED substrate 26 is disposed between the battery pack BP and the OLED cover 5 such that an element mounting surface faces the upper-lower direction. An OLED panel 17 is mounted on the OLED substrate 26.

As shown in FIG. 6, the pogo pin substrate 22 is disposed on the lower lid 7 such that an element mounting surface faces the upper-lower direction in a state where the lower lid 7 is closed. The pogo pin substrate 22 is provided with input-side contact points P1 to P3 to which electric power is supplied from the main substrate 20 via the main FPC 23, and pogo pins p1 to p3 which are connectors electrically connected to a load provided in the first cartridge 110. The input-side contact points P1 to P3 are electrically connected to the main FPC 23 only in a state where the lower lid 7 is closed. The three pogo pins p1 to p3 are provided at equal intervals in a peripheral direction, and at least two pogo pins are electrically connected to a positive terminal and a negative terminal of the first cartridge 110 accommodated in the cartridge holding portion 51.

A left side of the battery pack BP held by the battery holding portion 52 is exposed from the battery holding portion 52 due to the half-cylindrical battery holding portion 52. As shown in FIGS. 3, 4, and 6, the main FPC 23, the heater FPC 24, and the OLED FPC 25 are disposed to overlap one another in a space between the left side of the battery pack BP and the first case 3A, which is formed by cutting out the battery holding portion 52.

Among the three FPCs, the main FPC 23 is routed closest to battery pack BP, the OLED FPC 25 is routed to partially overlap the main FPC 23, and further the heater FPC 24 is routed to overlap the OLED FPC 25. That is, the heater FPC 24 to which the largest electric power is supplied among the three FPCs is routed to be farthest from the battery pack BP.

The OLED FPC 25 has one end connected to the OLED connector 20C of the main substrate 20 and the other end connected to the OLED substrate 26.

The main FPC 23 connects the main connector 20A of the main substrate 20, the switch BT of the operation unit, a connector 21B of the puff sensor substrate 21, and the input-side contact points P1 to P3 of the pogo pin substrate 22.

The heater FPC 24 has one end connected to the heater connector 20B of the main substrate 20, and the other end integrally formed with the sheet heater HTR.

### (First Cartridge)

The first cartridge 110 includes, inside a cylindrical cartridge case 31, a reservoir that stores an aerosol source, an electrical load that atomizes the aerosol source, a wick that draws the aerosol source from the reservoir to the load, and an aerosol flow path through which aerosol generated by atomization of the aerosol source flows toward the second cartridge 120. The aerosol source contains a liquid such as glycerin, propylene glycol, or water.

The load (atomizer) is a heating element that heats, without combustion, the aerosol source by electric power supplied from the power supply ba via the pogo pins p1 to p3 of the pogo pin substrate 22, and is implemented by, for example, a heating wire (coil) wound at a predetermined pitch. The load atomizes the aerosol source by heating the aerosol source. As the load, a heating resistor, a ceramic heater, an induction-heating-type heater, and the like may be used.

The aerosol flow path is connected to the second cartridge 120 via a flow path forming body 19 (see FIG. 6) accommodated in the cartridge holding portion 51 of the chassis 50.

### (Second Cartridge)

The second cartridge 120 stores a flavor source. When the second cartridge 120 is heated by the sheet heater HTR, the flavor source is heated. The second cartridge 120 flavors the aerosol when the aerosol generated by atomizing the aerosol source by the load passes through the flavor source. As a raw material piece constituting the flavor source, it is possible to use a molded product obtained by molding a shredded tobacco or a tobacco raw material into granules. The flavor source may be formed of plants other than tobacco (for example, mint, Chinese medicine, and herb). The flavor source may contain a fragrance such as menthol.

The aerosol generation device 10 can generate flavored aerosol using the aerosol source and the flavor source. That is, the aerosol source and the flavor source constitute an aerosol generation source that generates the flavored aerosol.

The aerosol generation source in the aerosol generation device 10 is a portion to be replaced and used by the user. In this portion, for example, one first cartridge 110 and one or a plurality of (for example, five) second cartridges 120 are provided as one set to the user. The battery pack BP can be repeatedly charged and discharged as long as the power supply ba is not significantly deteriorated. Accordingly, in the aerosol generation device 10, a replacement frequency of the power supply unit 100 or the battery pack BP is lowest, a replacement frequency of the first cartridge 110 is second lowest, and a replacement frequency of the second cartridge 120 is highest. The first cartridge 110 and the second cartridge 120 may be integrated into one cartridge. Instead of the flavor source, a chemical agent or the like may be added to the aerosol source.

In the aerosol generation device 10 configured as described above, air flowing in from an air intake port (not shown) provided in the case 3 or the internal unit 2 passes near the load of the first cartridge 110. The load atomizes the aerosol source drawn from the reservoir by the wick. The aerosol generated by atomization flows through the aerosol flow path together with the air flowing in from the intake port, and is supplied to the second cartridge 120 via the flow path forming body 19. The aerosol supplied to the second cartridge 120 is flavored when passing through the flavor source, and is supplied to an inhalation port 131 of the mouth piece 130.

### (Main Substrate)

Hereinafter, the main substrate 20 will be described in more detail with reference to FIGS. 7 to 9.

As described above, the main substrate 20 is a multilayer substrate formed by stacking a plurality of layers, and has a substantially rectangular shape. The main substrate 20 is disposed in a vicinity of the rear of the battery pack BP such that a longitudinal direction is the upper-lower direction and a short direction is the left-right direction.

As shown in FIG. 8, the MCU 6 and the charging IC 3 are mounted on the back surface 202 facing the battery pack BP. As shown in FIG. 7, the OLED connector 20C, the heater connector 20B, the main connector 20A, and the battery connector 20D are mounted on the front surface 201 facing the rear surface of the case 3 (the rear surface of the power supply unit 100). On the front surface 201, the OLED connector 20C, the heater connector 20B, the main connector 20A, and the battery connector 20D are arranged in this order from an upper side to a lower side.

Referring also to FIG. 6, the battery connector 20D is disposed at a lower portion of the front surface 201 in the upper-lower direction (longitudinal direction) such that at least a part thereof overlaps a lower surface of the battery pack BP when viewed in a horizontal direction. The lead wire 16 extending from the lower surface of the battery pack BP are connected to the battery connector 20D. In other words, the lead wire 16 is connected to the power supply ba of the battery pack BP and the battery connector 20D. The lead wire 16 may be connected to the power supply thermistor of the battery pack BP. Accordingly, since at least a part of the battery connector 20D overlaps the lower surface of the battery pack BP as viewed in the horizontal direction, a length of the lead wire 16 can be shortened.

The lead wire 16 passes through a left side surface of the main substrate 20 and is connected to the battery connector 20D from the left. As shown in FIG. 7, a left edge 203L of the front surface 201 of the main substrate 20 is provided with a cutout 80 formed by recessing the left side surface in a concave shape, and the lead wire 16 passes through the cutout 80 and is connected to the battery connector 20D. The lead wire 16 passing through the cutout 80 means that at least a part of the lead wire 16 overlaps a recessed space defined by the cutout 80 when viewed from a direction perpendicular to the front surface 201 and the back surface 202 (front-rear direction). Accordingly, a size of the power supply unit 100 in a width direction of the main substrate 20 (left-right direction) can be reduced as compared with a case where the cutout 80 is not provided.

As shown in FIG. 9, the cutout 80 includes a step portion 81 extending parallel to a linear portion 204 of the left edge 203L, and a pair of upper and lower inclined portions 82 connecting the step portion 81 and the linear portion 204, and has a trapezoidal shape when viewed from a direction perpendicular to the front surface 201 (front-rear direction). An angle α of the cutout which is an angle formed by the step portion 81 and the inclined portion 82 is set to be larger than 90°. That is, the upper inclined portion 82 is inclined obliquely downward toward the step portion 81, and the lower inclined portion 82 is inclined obliquely upward toward the step portion 81.

On the main substrate 20, a plurality of electronic components are mounted, and a plurality of conductive patterns 210 are formed. A conductive pattern 210 in FIG. 9 indicates a conductive pattern provided in an intermediate layer other than a front layer (front surface 201) of the main substrate 20 which is a multilayer substrate. A narrow portion of the conductive pattern through which electricity hardly passes becomes a parasitic resistance of the conductive pattern, and heat tends to be generated when electricity flows. Further, a corner portion of the conductive pattern in which an angle is less than 90° becomes a parasitic capacitance of the conductive pattern, and noise tends to be generated when electricity flows. Therefore, by setting the angle α of the cutout to be larger than 90° and making the conductive pattern 210 printed around the cutout 80 a curve of an obtuse angle, more conductive patterns 210 can be formed, and generation of heat and noise from the conductive patterns 210 can be prevented.

The angle α of the cutout is not necessarily greater than 90°, and may be 90° or greater. By setting the angle α of the cutout 80 to 90° or more, the lead wire 16 is not caught in the cutout 80, and thus the lead wire 16 is not damaged. In addition, unintended stress does not occur in the lead wire 16 and electronic components connected to the lead wire 16.

Further, the battery connector 20D is disposed such that a shortest distance between a center line CL of the main substrate 20 and the battery connector 20D is shorter than a shortest distance L between the cutout 80 and the battery connector 20D in the left-right direction (short direction). The shortest distance between the center line CL of the main substrate 20 and the battery connector 20D is a length of a shortest straight line connecting the center line CL and a portion of the battery connector 20D closest to the center line CL. Further, the battery connector 20D preferably overlaps the center line CL of the main substrate 20 when viewed from a direction (front-rear direction) perpendicular to the front surface 201 and the back surface 202. In the present embodiment, as shown in FIGS. 7 and 9, the battery connector 20D overlaps the center line CL of the main substrate 20, and the shortest distance between the center line CL of the main substrate 20 and the battery connector 20D is zero.

As described above, the main substrate 20 on which the battery connector 20D is mounted is disposed between the battery pack BP and the rear surface of the case 3 (the rear surface of the power supply unit 100), and the battery connector 20D is mounted on the front surface 201 of the main substrate 20 facing the rear surface of the case 3 (the rear surface of the power supply unit 100). Further, since the power supply ba of the battery pack BP supplies large electric power (large current), the lead wire 16 is thick and the battery connector 20D is thick. The battery connector 20D is one electronic component having a largest thickness (height) among the electronic components mounted on the front surface 201.

A position of the battery connector 20D affects a size of the gap between the main substrate 20 and the rear surface of the case 3. Accordingly, when the battery connector 20D having such a large thickness (large height) is provided on an end portion of the main substrate 20 in the width direction (left-right direction), a large gap between the main substrate 20 and the case 3 needs to be secured in order to prevent interference between the battery connector 20D and the rear surface of the case 3. Since the battery connector 20D is mounted near a center of the main substrate 20, the power supply unit 100 can be reduced in size. In particular, since the case 3 has a rounded shape, when the battery connector 20D is mounted near the center of the main substrate 20, distances between both sides of the main substrate 20 in the width direction (left-right direction) and the case 3 can be reduced, and the power supply unit 100 can be further reduced in size in addition to being easy to be held by the user.

It is preferable that no electronic component is mounted between the cutout 80 and the battery connector 20D on the front surface 201 of the main substrate 20. Accordingly, the electronic components mounted on the front surface 201 are less likely to receive stress from the lead wire 16, and thus durability of the power supply unit 100 is improved.

Further, the front surface 201 and the back surface 202 of the main substrate 20 are covered with an insulating film 220 having an insulating property, and the conductive patterns are not short-circuited. However, as shown in FIG. 9, the left edge 203L is an insulating-film-non-forming portion 230 in which the insulating film 220 is not provided. The insulating-film-non-forming portion 230 is formed with a predetermined width along the linear portion 204 of the left edge 203L of the front surface 201, including the linear portion 204. On the main substrate 20, a ground having a common reference potential and a ground pattern 231 which is a conductive pattern connected to the ground or forming the ground are provided, and the ground pattern 231 is exposed in the insulating-film-non-forming portion 230.

As described above, the ground pattern 231 is exposed from the insulating film 220 due to the insulating-film-non-forming portion 230 of the front surface 201 and the back surface 202 of the main substrate 20, and thus noise (for example, electrostatic noise) from the outside easily enters the ground pattern 231. Then, the noise entering the ground pattern 231 enters the ground from the ground pattern 231. Therefore, even if other electronic component such as capacitors as a noise countermeasure are not provided, the noise can be prevented from entering the electronic component connected to the conductive pattern, and a bad influence caused by the noise can be prevented. Further, since the other electronic components such as capacitors as the noise countermeasure can be simplified or omitted, the power supply unit 100 can be reduced in size and cost.

Meanwhile, the step portion 81 of the cutout 80 is covered with the insulating film 220. In other words, the insulating-film-non-forming portion 230 is not provided in the step portion 81 of the cutout 80. Since the lead wire 16 whose surface is insulated by a coating material having an insulating property passes through the cutout 80, the coating material prevents transmission of external noise. Accordingly, even if the ground pattern 231 in this portion is exposed, external noise does not reach the ground. Therefore, by not exposing the ground pattern 231 of the cutout 80, a process for exposure can be shortened. Accordingly, the power supply unit 100 can be reduced in cost.

An edge of the main substrate 20 on which the insulating-film-non-forming portion 230 is provided is not limited to the left edge 203L, and may include any one of a right edge, an upper edge, and a lower edge, or two or more of the edges.

As shown in FIG. 6, the OLED FPC 25, the heater FPC 24, and the main FPC 23 pass through the left side surface of the main substrate 20 and are respectively connected to the OLED connector 20C, the heater connector 20B, and the main connector 20A, which are other connectors arranged on the front surface 201 of the main substrate 20, from the left, similarly to the lead wire 16. Accordingly, the power supply unit 100 can be reduced in size as compared with a case where the FPCs 25, 24, and 23 pass through a side surface of the main substrate 20 different from that of the lead wire 16. In addition, by concentrating the FPCs 25, 24, and 23 and the lead wire 16 on the same side surface (left side surface in the present embodiment) of the main substrate 20, the management of the wiring is facilitated.

Further, since the OLED connector 20C, the heater connector 20B, and the main connector 20A are mounted on the same front surface 201 as the battery connector 20D, a thickness of the main substrate 20 can be reduced as compared with a case where the OLED connector 20C, the heater connector 20B, and the main connector 20A are mounted on a surface of the main substrate 20 different from that of the battery connector 20D, so that the power supply unit 100 can be reduced in size.

Although various embodiments have been described above with reference to the drawings, it goes without saying that the present invention is not limited to such examples. It is apparent to those skilled in the art that various modifications or corrections can be conceived within the scope described in the claims, and it is understood that the modifications or corrections naturally fall within the technical scope of the present invention. In addition, respective constituent elements in the above embodiment may be optionally combined without departing from the gist of the invention.

For example, in the above-described embodiment, the cutout 80 through which the lead wire 16 passes is provided at the left edge 203L of the main substrate 20, but is not limited thereto, and may be provided on a right edge, an upper edge, or a lower edge.

In the present description, at least the following matters are described. In parentheses, corresponding constituent components and the like in the above-mentioned embodiment are indicated, but the present invention is not limited thereto.
(1) A power supply unit (power supply unit 100) for an aerosol generation device (aerosol generation device 10), the power supply unit including:
   a circuit substrate (main substrate 20) including a first surface (front surface 201), a second surface (back surface 202) located on a back side of the first surface, and a power supply connector (battery connector 20D) mounted on the first surface;
   a power supply (power supply ba) configured to supply electric power to an atomizer (load) that atomizes an aerosol source, the power supply being disposed on a second surface side; and
   a power supply wiring (lead wire 16) connected to the power supply and the power supply connector, in which
   the circuit substrate includes a cutout (cutout 80), and
   the power supply wiring passes through the cutout.
   According to (1), a size of the power supply unit of the aerosol device in a width direction or a length direction of the circuit substrate can be reduced as compared with a case where the cutout is not provided, and thus the power supply unit of aerosol generation device can be reduced in size.
(2) The power supply unit of the aerosol generation device according to (1), in which
   a shortest distance between a center line (center line CL) of the circuit substrate and the power supply connector is shorter than a shortest distance (shortest distance L) between the cutout and the power supply connector.
   Since the power supply supplies large electric power (large current), the power supply wiring is thick and the power supply connector is thick. According to (2), the power supply connector having such a large thickness (large height) is mounted near a center of the circuit substrate. Accordingly, even when a size of a housing of the power supply connector is reduced, the housing is less likely to interfere with the power supply connector, so that the power supply unit of the aerosol generation device can be reduced in size.
(3) The power supply unit of the aerosol generation device according to (2), in which
   the power supply connector overlaps the center line of the circuit substrate when viewed from a direction (front-rear direction) orthogonal to the first surface and the second surface.
   According to (3), the power supply connector having such a large thickness (large height) is mounted near the center of the circuit substrate. Accordingly, even when a size of the housing of the power supply connector is reduced, the housing is less likely to interfere with the power supply connector, so that the power supply unit of the aerosol generation device can be reduced in size.
(4) The power supply unit of the aerosol generation device according to any one of (1) to (3), further including:
   a housing (case 3) configured to accommodate the circuit substrate and the power supply and having a rounded shape.
   According to (4), since the housing for an aerosol generation device is reduced in size and has a rounded shape, an aerosol generation device which is small in size and easy to hold can be provided.
(5) The power supply unit of the aerosol generation device according to any one of (1) to (4), in which
   the cutout is provided at a first edge (left edge 203L) among edges of the circuit substrate,
   the cutout includes a step portion (step portion 81) extending parallel to a linear portion (linear portion 204) of the first edge, and an inclined portion (inclined portion 82) connecting the step portion and the linear portion, and
   an angle (angle α) of the cutout, which is an angle formed by the step portion and the inclined portion, is 90° or more
   According to (5), since the power supply wiring is not caught in the cutout, the power supply wiring is not damaged, and an unintended stress is not generated in the power supply wiring or an electronic component connected to the power supply wiring.
(6) The power supply unit of the aerosol generation device according to (5), in which
   the angle of the cutout is greater than 90°.
   According to (6), since a conductive pattern passing through a vicinity of the cutout has a curve of the obtuse angle, more conductive patterns can be formed on the circuit substrate, and generation of heat and noise from the conductive patterns can be prevented.
(7) The power supply unit of the aerosol generation device according to any one of (1) to (6), in which
   no electronic component is mounted between the cutout and the power supply connector on the first surface.
   According to (7), the electronic component mounted on the first surface is less likely to receive stress from the power supply wiring, and thus durability of the power supply unit of the aerosol generation device is improved.
(8) The power supply unit of the aerosol generation device according to any one of (1) to (7), in which
   the circuit substrate includes a ground and a conductive pattern (ground pattern 231) connected to the ground or forming the ground,
   the cutout is provided at a first edge (left edge 203L) among edges of the circuit substrate,
   an insulating film (insulating film 220) is formed on a step portion (step portion 81) of the cutout which extends parallel to a linear portion (linear portion 204) of the first edge,
   the insulating film is not formed in at least a part of the linear portion of the first edge, and
   the conductive pattern is exposed in at least the part of the linear portion of the first edge.
   According to (8), since noise from an outside easily enters the ground via the conductive pattern in the linear portion of the first edge, a bad influence caused by the noise can be prevented. Further, since other electronic components such as capacitors as a noise countermeasure can be simplified or omitted, the power supply unit of the aerosol generation device can be reduced in size and cost. Meanwhile, the power supply wiring whose surface is insulated by a coating material having an insulating property passes through the cutout. Even if the conductive pattern of this portion is exposed, the coating material of the power supply wiring prevents transmission of external noise, so that the external noise does not reach the ground. Therefore, by not exposing the conductive pattern in this portion, a process for exposure can be shortened. Accordingly, cost of the power supply unit of the aerosol generation device can be reduced.
(9) The power supply unit of the aerosol generation device according to any one of (1) to (8), further including:
   a housing (case 3) configured to accommodate the power supply and the circuit substrate;
   an electronic component (OLED substrate 26, sheet heater HTR, switch BT, puff sensor substrate 21, and pogo pin substrate 22) accommodated inside the housing; and
   a first connector (OLED connector 20C, heater connector 20B, and main connector 20A) connected to the electronic component via a first wiring (OLED FPC 25, heater FPC 24, and main FPC 23), in which
   the first wiring and the power supply wiring pass through a side (left side) of the same side surface (left side surface) among a plurality of side surfaces of the circuit substrate.
   According to (9), the power supply unit of the aerosol generation device can be reduced in size as compared with a case where the power supply wiring and the first wiring pass through different side surfaces of the circuit substrate. In addition, by concentrating the power supply wiring and the first wiring on the same side surface of the circuit substrate, management and routing of the wiring are facilitated.
(10) The power supply unit of the aerosol generation device according to (9), in which
   the first connector is mounted on the first surface.
   According to (10), as compared with a case where the power supply connector and the first connector are mounted on different surfaces, a thickness of the circuit substrate is reduced, and thus the power supply unit of the aerosol generation device can be reduced in size.

### REFERENCE SIGNS LIST

3: case (housing)
16: lead wire (power supply wiring)
20: main substrate (circuit substrate)
20A: main connector (first connector)
20B: heater connector (first connector)
20C: OLED connector (first connector)
20D: battery connector (power supply connector)
21: puff sensor substrate (electronic component)
22: pogo pin substrate (electronic component)
23: main FPC (first wiring)
24: heater FPC (first wiring)
25: OLED FPC (first wiring)
26: OLED substrate (electronic component)
80: cutout
81: step portion
82: inclined portion
100: power supply unit
201: front surface (first surface)
202: back surface (second surface)
203L: left edge (first edge)
204: linear portion
220: insulating film
231: ground pattern (conductive pattern)
ba: power supply
BT: switch (electronic component)
CL: center line of main substrate (center Line of circuit substrate)
L: shortest distance between cutout and battery connector (shortest distance between cutout and power supply connector)
α: angle of cutout
HTR: sheet heater (electronic component)

## Claims

1. A power supply unit of an aerosol generation device, the power supply unit comprising:
a circuit substrate including a first surface, a second surface located on a back side of the first surface, and a power supply connector mounted on the first surface;
a power supply configured to supply electric power to an atomizer that atomizes an aerosol source, the power supply being disposed on a second surface side; and
a power supply wiring connected to the power supply and the power supply connector, wherein
the circuit substrate includes a cutout, and
the power supply wiring passes through the cutout.

2. The power supply unit of the aerosol generation device according to claim 1, wherein
a shortest distance between a center line of the circuit substrate and the power supply connector is shorter than a shortest distance between the cutout and the power supply connector.

3. The power supply unit of the aerosol generation device according to claim 2, wherein
the power supply connector overlaps the center line of the circuit substrate when viewed from a direction orthogonal to the first surface and the second surface.

4. The power supply unit of the aerosol generation device according to any one of claims 1 to 3, further comprising:
a housing configured to accommodate the circuit substrate and the power supply, and having a rounded shape.

5. The power supply unit of the aerosol generation device according to any one of claims 1 to 4, wherein
the cutout is provided at a first edge among edges of the circuit substrate,
the cutout includes a step portion extending parallel to a linear portion of the first edge, and an inclined portion connecting the step portion and the linear portion, and
an angle of the cutout, which is an angle formed by the step portion and the inclined portion, is 90° or more.

6. The power supply unit of the aerosol generation device according to claim 5, wherein
the angle of the cutout is greater than 90°.

7. The power supply unit of the aerosol generation device according to any one of claims 1 to 6, wherein
no electronic component is mounted between the cutout and the power supply connector on the first surface.

8. The power supply unit of the aerosol generation device according to any one of claims 1 to 7, wherein
the circuit substrate includes a ground and a conductive pattern connected to the ground or forming the ground,
the cutout is provided at a first edge among edges of the circuit substrate,
an insulating film is formed on a step portion of the cutout which extends parallel to a linear portion of the first edge,
the insulating film is not formed in at least a part of the linear portion of the first edge, and
the conductive pattern is exposed in at least the part of the linear portion of the first edge.

9. The power supply unit of the aerosol generation device according to any one of claims 1 to 8, further comprising:
a housing configured to accommodate the power supply and the circuit substrate;
an electronic component accommodated inside the housing; and
a first connector connected to the electronic component via a first wiring, wherein
the first wiring and the power supply wiring pass through a side of the same side surface among a plurality of side surfaces of the circuit substrate.

10. The power supply unit of the aerosol generation device according to claim 9, wherein
the first connector is mounted on the first surface.
